# EUROPEAN PATENT APPLICATION

(11) **EP 4 481 065 A2**
(43) Date of publication of application: **25.12.2024**
(21) Application number: 23714621.2
(22) Date of filing: 14.02.2023
(51) Int. Cl.: C22B 1/00, C22B 3/10, C22B 3/26, C22B 23/00, C22B 3/00, C22B 34/32

(54) **METHOD FOR OBTAINING A NICKEL ORE CONCENTRATE, METHOD FOR PROCESSING A NICKEL ORE CONCENTRATE, AND METHOD FOR RECOVERING MATERIALS DERIVED FROM NICKEL ORE**

(30) Priority: 14.02.2022 BR 102022002760
(71) Applicant: Lorintech Tecnologia S.A., 22290-160 Rio de Janeiro - RJ (BR)
(72) Inventor: ARANTES ARAÚJO, Lucas, 22290-160 Rio de Janeiro - RJ (BR)
(74) Representative: Michalski Hüttermann & Partner Patentanwälte mbB
(86) International application number: PCT/BR2023/050052
(87) International publication number: WO 2023/150855

(57) **Abstract**

The present invention refers a method of recovering materials derived from nickel ore, involving a method of obtaining nickel ore concentrate and a processing method of said concentrate, whereby nickel ore can be processed in an efficient and ecological manner, and residues and materials currently untapped can be recovered from this nickel ore.

## Description

The present invention refers a method of recovering materials derived from nickel originating from supergene alteration, involving a method of obtaining nickel concentrate and a method of processing said concentrate.

By way of the present invention, ecological and economic gains and advantages are enabled, in particular:
(i) Enabling the recovery of nickel ores and materials currently untapped from this nickel, drastically reducing the waste disposed into the environment;
(ii) Decreasing the use of fossil-source heating, reducing the emission of CO2 typical of this type of process;
(iii) Recovering economically relevant materials, in accordance with the new reality of the circular economy.

### Description of the State of the Art

The nickel is a basic strategic metal in the construction of stainless steel. It is also strategic in battery technology together with iron phosphate, is also strategic for medical equipment, wind turbines, production of special steel alloys, and other applications.

Today, the nickel market is over two thirds relative to the production of steel and steel alloys (class II nickel), and less than one third relative to the production of high purity derivatives with a minimum of 99.0% (class I nickel), the latter being a critical metal in the development of the energy sector, which is bottlenecked by energy storage and has shown high growth with the alteration of the energy matrix from fossil fuel to renewables.

Known nickel deposits originate from laterite, sulfates and seabed magnesium nodules. There are great quantities of the latter, but not viable for exploiting, since the first two are raw materials for producing nickel and nickel alloys.

Sulfated nickel deposits are derived from volcanic and hydrothermal methods, this type of ore is easily processed by the conventional flotation methods owing to the fact that the nickel is sulfated. In contrast, sulfated nickel deposits represent about 30% to 40% of world reserves of nickel that can be processed.

Laterite nickel ore deposits represent from 60% to 70% of world reserves, meaning laterite ores are the most relevant source for processing.

For practical grouping purposes for processing, laterite nickel ore deposits can be divided into 4 zones: zone 1, red laterite, with lower nickel content (0.5% to 0.8% Ni), zone 2 yellow laterite with greater nickel content (0.8% to 1.2% Ni), zone 3 transition to saprolite with greater nickel content (1.2 to over 2% of Ni) and zone 4, saprolite, with nickel content over 1.5%, and magnesium and iron composition different to zone 3, in a general manner.

Different types of processing are carried out on these deposits, mainly as follows: the use of the 3 first zones in hydrometallurgical processing methods such as high pressure acid leaching (HPAL) and Caron. And zone 4, saprolite, is utilized in the pyrometallurgical method for producing metallic ferronickel.

The formation of nickel deposits by lateritization methods involves the combination and interaction of various geological and environmental factors. It begins with the intrusion and serpentinization of ul-tramafic bodies, followed by their exposure by way of tectonic events and/or erosion methods and subjected to tropical, humid climates that promote the development of a deep and heavily weathered regolith. During this phase, the Nickel is concentrated in the goethites and/or smectites in residual form due to the strong dissolution of the Magnesium and Silicon from the primary rock. This is where ferruginous laterite levels of red (LV) and yellow (LM) limonite develops. Next, most deposits were subjected to tectonic events and climactic changes. Where these changes were minor, the deposits may have been buried, or in more and climates have caused reduced weathering and have preserved the deposits. When the uplift is significant, loss by erosion may increase but, under the action of humid climates and deeper water table, it is offset by continued weathering and enrichment of Nickel mobilized from the upper portions of the profile in neoformed magnesium silica hydrates, whereby constituting deeper levels of mineralized saprolite. This method makes the ions with greater mobility remain in solution, enriching the layers of the oxidized deposit with minerals of interest such as nickel and cobalt, these particles precipitate in a fine manner and cover other particles of the deposits, including some rich in nickel and cobalt such as olivine.

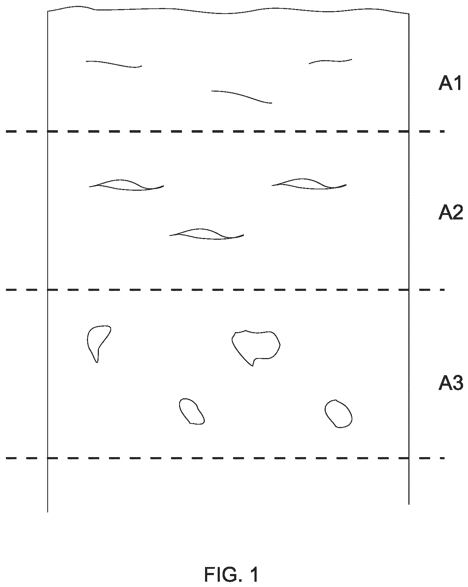

For improved understanding, figure 1 discloses a schematic representation of the laterite zone, comprising a region A1 that represents the ferruginous portion near the surface, a region A2 that represents the oxidized portion (red and yellow limonite), and a region A3 that represents the saprolite region. It is highlighted that the laterite zone is subutilized or simply overlooked by iron nickel-producing companies, being considered below the plant feed specifications or untappable. In this sense, the world production of nickel is concentrated in 52% of the sulfated ore and 48% of the laterite ore. The laterite ore is used mainly for the production of nickel pig iron (NPI) and iron nickel, and the part utilized for this purpose is found in the saprolite zone.

Of the world reserves of laterite ore, only 5% to 8% of the laterite zone is utilized for producing class I nickel, mainly by the HPAL method.

It is worth noting that currently, the main known methods of processing laterite nickel ore are Caron and the High Pressure Acid Leaching (HPAL) and these are not capable of using the saprolite zone of the deposit.

In point of fact, the Caron method is economically and environmentally unfavorable in that it requires high production and operating costs, besides its high emissions of carbon dioxide (CO2).

In contrast, the commonly-used HPAL method can be described in general terms as a high pressure acid leaching method that besides sulfuric acid uses high temperatures (about 255 degrees Celsius) and high pressures (about 50 bar or 725 psi) for separating the nickel and the cobalt from the laterite ore.

This is where some problems of the state of the art arise in relation to extracting nickel from the laterite zone:

None of the methods currently known are capable of processing the ferruginous portion A1 (above the oxidized portion of red and yellow limonite) of the laterite nickel zone. This means that said ferruginous portion A1 is considered waste/residue by the industry¹ which operates with the laterite nickel zone, and same is simply stored indefinitely (by dry pile-up or "dry stacking"), causing serious ecological problems and high operating losses.

Moreover, the saprolite portion A3 of the laterite zone is currently only utilized for extracting class II nickel (iron nickel), which is a reduced purity nickel used for producing stainless steel, for the most part. There are currently no known methods that enable the recovery of high purity class I nickel from the saprolite portion A3 of the laterite nickel zone, which means that at least part of this saprolite portion is treated as residue/waste of the method by the industry², it also just being piled up in the post-processing and causing ecological problems and operating losses.

Further, none of the methods currently known in the state of the art are capable of efficiently extracting other materials of interest from the laterite zone, being limited to just class I or II nickel. It is known that the laterite zone has other economically relevant materials (such as magnesium, for example), but said materials cannot be extracted by currently known methods, to the extent that they are discarded or stockpiled after processing the residue/waste.

It is further emphasized that the oxidized portion A2 of the laterite zone can only currently be processed through methods such as HPAL and CARON for extracting nickel hydroxide and cobalt. Said methods are not capable of working with the saprolite portion A3 of the laterite zone. Nor are said methods capable of working with nickel portions that are rich in magnesium, since the extraction is unfeasible from an economic point of view.

It is also important to note that currently there is no method capable of extracting materials of interest from both the oxidized A2 and saprolite A3 portions of the laterite zone. Studies³ are currently underway in the attempt to apply the method of "heap leaching" to the oxidized and saprolite portions, but this method is highly costly and operationally inconvenient because it requires the stock-piling of large quantities of material and leaching by percolation. Nor is this method capable of treating the upper ferruginous portion A1 of the laterite zone.

In relation to the residues/waste *per se,* the methods known in the state of the art generate at least three types of residues/waste:

(A) A first type of residue/waste is the upper ferruginous portion A1 of the laterite zone *per se,* since none of the known methods is capable of operating efficiently on this portion.

(B) A third type of residue/waste is the remainder of the materials of interest from the oxidized portion A2 of the laterite zone, given that the currently existing methods (for example, HPAL, CARON) are not capable of extracting any material from the laterite zone apart from class I nickel. Accordingly, other materials of economic interest (such as magnesium) are discarded.

(C) A second type of residue/waste is the leftovers from processing the portion of saprolite A3 processed for producing class II nickel. Since the known methods of hydrometallurgy are not capable of extracting class I nickel from the saprolite portion of the laterite zone, the remainder of the materials of interest from this portion is discarded at the end of the method.

Based on the explanations above, another problem is noted in the state of the art which is the use of heat originating from polluting sources such as the coal, the burning of which produces CO2, knowingly harmful to the environment.

Additionally, another problem is also noted in the state of the art which is the use of sulfuric acid in the method of recovering materials derived from nickel ore, generating a contaminated residue, contrary to the method of this patent.

The sulfuric acid has low selectivity for leaching in this type of method, and its vapor pressure is relatively low, which hampers its regeneration in these methods and requires neutralization and subsequent treatment for the disposal thereof.

### Bibliography referred to above

1. GUIMARÃES, Carolina das Graças Graciano. Caracterização Tecnológica de Minério de Niquel Laterítico. Orientador: Leandro Rocha Lemos. 2019. Dissertação (Mestrado em Engenharia Metalúrgica, Materiais e de Minas) - UNIVERSIDADE FEDERAL DE MINAS GERAIS, [S. I.], 2019.
2. DA COSTA, João Paulo Rodrigues. Caracterização da escória de ferro-niquel para aplicação como enrocamento de diques galgáveis drenantes. Orientador: Gilberto Fernandes. 2019. Dissertação (Mestrado em Geotecnia) - Universidade Federal de Ouro Preto, Ouro Perto, 2019.
3. OXLEY, Anne et al. Why heap leach nickel laterites?. Minerals Engineering, [S. I.], p. 1-8, 15 mar. 2016.

### Objectives of the invention

Accordingly, a first objective of the present invention is to provide methods related to nickel ore processing, including the saprolite portion, so as to enable the recovery of marginal ore from the production mine of ferronickel and materials currently untapped from this type of deposit, whereby enabling the use of this part of the deposit. Ferronickel-producing companies stock-pile this laterite portion and mainly use the saprolite fraction of the deposit.

A second objective of the present invention is to provide methods related to nickel ore processing that allow reduced use of fossil-source heating, decreasing the emission of CO2 typical of this type of method when compared to the state of the art.

A third objective of the present invention is to provide methods related to nickel ore processing that enable the recovery of economically relevant materials.

A fourth objective of the present invention is to provide a method of obtaining a nickel ore concentrate comprising suitable characteristics for enabling subsequent, high-efficiency chemical processing.

A fifth objective of the present invention is to provide an improved method of processing nickel ore by means of specific steps that enhance the efficiency of the method, starting from a nickel ore concentrate.

A sixth objective of the present invention is to provide a method of processing a nickel ore concentrate for recovering strategic materials, for example, but not exhaustively, iron phosphate (FePO₄) and nickel hydroxide and cobalt (HNC), or as it is known commercially Mixed Hydroxide Precipitate (MHP).

### Brief Description of the Invention

The present invention refers to a method of obtaining a nickel ore concentrate comprising the steps of: scrubbing the nickel ore; sorting the nickel ore by size into at least one fine fraction and one coarse fraction; magnetically sorting the coarse fraction for obtaining a magnetic fraction; grinding the magnetic fraction for obtaining a fine magnetic fraction; and combining the fine fraction and the fine magnetic fraction for obtaining a nickel ore concentrate.

In one possible embodiment of the method of obtaining a nickel ore concentrate, the scrubbing step is carried out using twin rotor mill, rod mill or scrubber type equipment.

In another possible embodiment of the method of obtaining a nickel ore concentrate, the scrubbing step occurs for between 2 and 50 minutes.

In another possible embodiment of the method of obtaining a nickel ore concentrate, the step of sorting by size obtains a fine fraction with a particle size smaller than 75µm and a coarse fraction with a particle size greater than 75µm.

In another possible embodiment of the method of obtaining a nickel ore concentrate, the method comprises a crushing step performed until the processed material is under 2" in size.

The present invention further comprises a method of processing a nickel ore concentrate comprising the steps of mixing a nickel ore concentrate with hydrochloric acid; heating the nickel ore concentrate until converting over 90% of the nickel and cobalt contained in the nickel ore concentrate into its soluble chloride form, and until achieving a desired conversion of the iron, chrome and titanium contained in the nickel ore concentrate into its insoluble oxide form; leaching the nickel ore concentrate with water for solubilizing the nickel and the cobalt contained in the nickel ore concentrate; and obtaining a liquor laden with nickel, cobalt, iron and magnesium.

In one possible embodiment of the method of processing a nickel ore concentrate, the heating step is carried out by microwave irradiation.

In one possible embodiment of the method of processing a nickel ore concentrate, the leaching step is assisted by microwave irradiation.

In another possible embodiment of the method of processing a nickel ore concentrate, the method comprises the step of regenerating the hydrochloric acid used in the first leaching step by evaporation thereof in the heating step, condensing the hydrochloric acid vapor and returning the condensed hydrochloric acid to the leaching step.

In another possible embodiment of the method of processing a nickel ore concentrate, the first leaching step comprises adding 0.1 to 5 ml/g of hydrochloric acid per gram of nickel ore concentrate.

In another possible embodiment of the method of processing a nickel ore concentrate, the heating step comprises heating for a period of 15 to 30 minutes.

In another possible embodiment of the method of processing a nickel ore concentrate, the second leaching step comprises microwave irradiation at a temperature between 20°C and 60°C.

In another possible embodiment of the method of processing a nickel ore concentrate, the method comprises a filtering step of the liquor for obtaining the insoluble oxide form containing iron, chrome and titanium.

In another possible embodiment of the method of processing a nickel ore concentrate, the method comprises a precipitation step for extracting the iron contained in the LI liquor by adding at least one source of phosphate in stoichiometric proportion to the liquor.

In another possible embodiment of the method of processing a nickel ore concentrate, the method comprises the steps of: using MnO2 and KMnO4 for precipitating the manganese subproduct of the precipitation step (240) for extracting the iron contained in the LI liquor; and precipitating the MHP adding magnesium oxide.

In another possible embodiment of the method of processing a nickel ore concentrate, the method comprises the steps of: adding a solvent to the liquor for obtaining a liquor comprising mostly nickel and cobalt; stripping the solvent by adding hydrochloric acid to the liquor; and returning the solvent to the extraction step.

In another possible embodiment of the method of processing a nickel ore concentrate, the method comprises the step of adding magnesium oxide to the liquor for obtaining nickel hydroxide and cobalt.

In another possible embodiment of the method of processing a nickel ore concentrate, the method comprises a step of pyrohydrolysis of the liquor for extracting magnesium oxide and hydrochloric acid.

In another possible embodiment of the method of processing a nickel ore concentrate, the method comprises the steps of: mixing a coarse magnetic fraction rich in chrome with H2O2; and irradiating the mixture by microwaves for the time needed for converting over 90% of the chrome phases into sodium chromate.

The present invention further comprises a method of recovering nickel ore derivatives comprising the steps of a method of obtaining a nickel ore concentrate as referred to above in any one of its possible embodiments, and further comprises the steps of a method of processing a nickel ore concentrate as referred to above in any one of its possible embodiments.

### Brief Description of the Drawings

The figures show:
Figure 1 - is a schematic reproduction of the laterite zone divided into its ferruginous portions A1, oxidized portion A2 and saprolite portion A3.

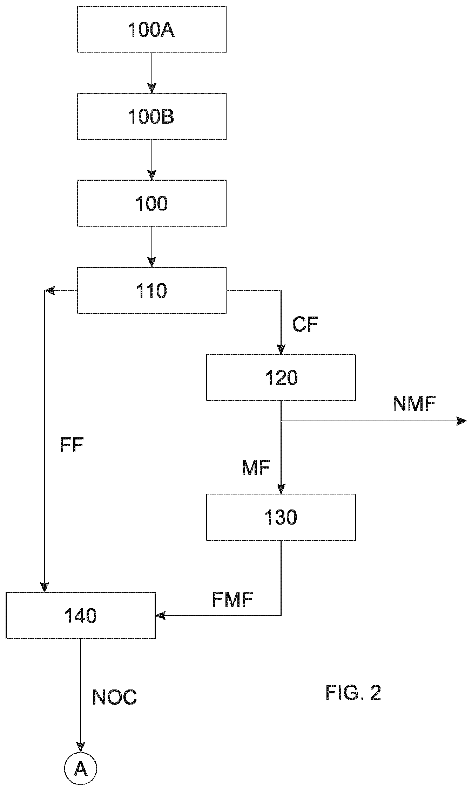

Figure 2 - is a flowchart of the method of obtaining a nickel ore concentrate according to one possible embodiment of the present invention;

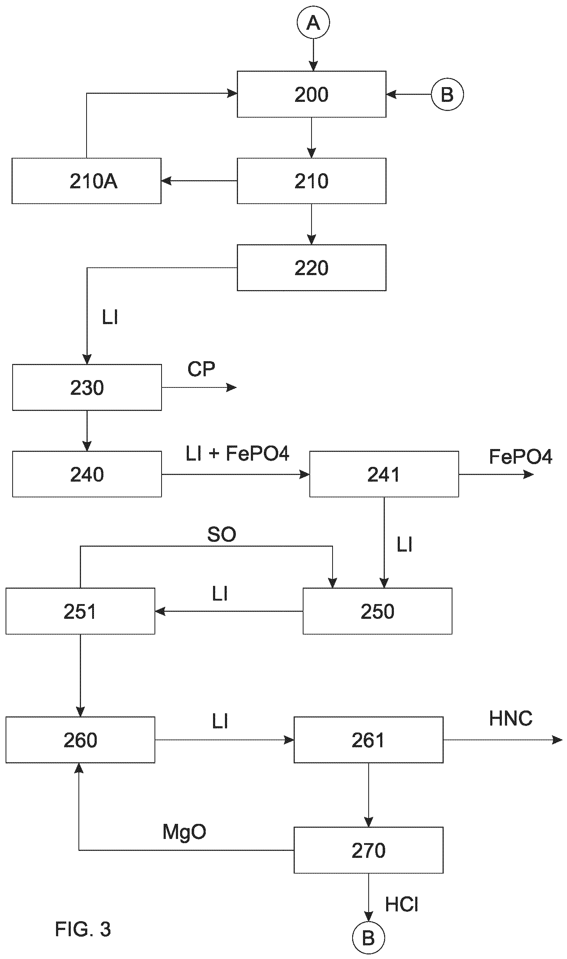

Figure 3 - is a flowchart of the method of processing nickel ore concentrate according to another possible embodiment of the present invention;
Figure 4 - is a first graph relating to the recovery of iron (%) obtained by the methods of the present invention correlated with the quantity of hydrochloric acid used (in L/kg) and the microwave irradiation time (in minutes); and
Figure 5 - is a second graph relating to the recovery of nickel (%) obtained by the methods of the present invention correlated with the quantity of hydrochloric acid used (in L/kg) and the microwave irradiation time (in minutes).
Figure 6 - is a third graph relating to the recovery of iron (%) obtained by the methods of the present invention correlated with the quantity of hydrochloric acid used (in L/kg) and the microwave irradiation time (in minutes).
Figure 7 - is a fourth graph relating to the recovery of nickel (%) obtained by the methods of the present invention correlated with the quantity of hydrochloric acid used (in L/kg) and the microwave irradiation time (in minutes).

### Detailed Description of the Drawings

Firstly, it is underlined that the term "preferred" used herein should not be understood as "imperative" or "compulsory". The term "preferred" is intended to characterize an embodiment of particular efficiency of the invention among the multiple possible ones, the scope of the invention being limited solely by its characteristics that are absolutely essential for obtaining the technical effects proposed.

For the purpose of understanding the present invention, the term "nickel ore" should be understood as any source of nickel, natural or otherwise, pure or pre-processed, that is not sulfated.

The present invention proposes methods for recovering materials derived from nickel ore, involving the obtainment of a nickel ore concentrate and the processing of this concentrate for recovering materials of interest.

Regarding the method of obtaining a nickel ore concentrate, one possible embodiment is described below:

### METHOD OF OBTAINING A NICKEL ORE CONCENTRATE

With regards to obtaining a nickel ore concentrate, the method in question comprises, in a general manner, in one possible embodiment, but not imperatively, the steps of:
- optionally, carrying out the preliminary processing steps 100A;
- optionally, drying, crushing and grinding 100B the nickel ore;
- dry or wet scrubbing 100 the nickel ore;
- sorting 110 the nickel ore by size into at least one fine fraction FF and one coarse fraction CF;
- magnetically sorting 120 the coarse fraction CF for obtaining the magnetic fraction MF,
- scrubbing 130 the coarse fraction CF for obtaining a fine magnetic fraction FMF; and
- combining 140 the fine fraction FF and the fine magnetic fraction FMF for obtaining a nickel ore concentrate NOC.

Details of each one of these steps will be described below:

### Preliminary processing steps:

In one possible embodiment, and optionally, preliminary processing steps 100A can be used, such as feeding the nickel ore into a feed silo, among other steps necessary for the logistics of preparing said material for the subsequent steps.

### Drying and crushing:

In one possible embodiment, and optionally, use can be made of a drying and crushing 100B step of the nickel ore, the aim of which is to obtain particles having homogeneous particle size, which facilitates subsequent processing of the material. Crushing can be performed, for example, by a crushing machine of the mineral sizer or conic type. Grinding can be carried out, for example, in a rod mill or twin roll mill. Said comminution 100B is carried out preferably until the processed material is under 2" in size, preferably reaching ranges of less than 1/4".

Subsequently, the ore is ready for a scrubbing step 100.

### Scrubbing step:

The purpose of the scrubbing step 100 is mainly to shred the crusts that encapsulate the silicate minerals of nickel and ferronickel agglomerates of this mining product, whereby enabling the obtainment of nickel-bearing particles having a large surface area, which is beneficial for the subsequent processing of this material, effectively enriching the nickel content contained in the fine fraction of the nickel ore.

Put otherwise, the scrubbing step 100 advantageously breaks down the ore particles besides cleaning them, on the surface, of the chemically precipitated material by supergene alteration, essentially comprised of goethite. These fine particles, resulting from chemical precipitation that were aggregated on the surface of the larger particle and were released by scrubbing, will concentrate on the finer portion of the ore. This step makes the ferruginous finer part suitable for leaching and the coarse fraction ready for being magnetically sorted as the mineral surfaces of these coarse particles will be clean. This point is vital so that the leaching and magnetic sorting methods occur with high efficiency.

In short, after this cleaning by scrubbing 100 and sorting by size, the nickel-bearing ore particle has a greater surface area, advantageously facilitating the subsequent processing thereof. Additionally, the coarse fraction is free of these particles, whereby enabling the efficient magnetic sorting thereof.

For illustration purposes, Tables 1 to 4 below show comparative tests between the increase in scrubbing time (scrubbing step 100) and the nickel content of the fine fraction obtained:

| **Table 1 - Scrubber Nickel Zone 1: 5 minutes** | | | | |
|---|---|---|---|---|
| **Fraction** | **Weight (%)** | **Ni (%)** | **Ni Contained** | **Nickel Distribution (%)** |
| +20 µm | 58.22 | 0.33 | 0.19 | 39.25 |
| -20 µm | 41.78 | 0.72 | 0.30 | 60.75 |

| **Scrubber Nickel Zone 1: 20 minutes** | | | | |
|---|---|---|---|---|
| **Fraction** | **Weight (%)** | **Ni (%)** | **Ni Contained** | **Nickel Distribution (%)** |
| +20 µm | 54.17 | 0.29 | 0.16 | 32.55 |
| -20 µm | 45.83 | 0.72 | 0.33 | 67.45 |

| **Table 2** - **Scrubber Nickel Zone 2: 5 minutes** | | | | |
|---|---|---|---|---|
| **Fraction** | **Weight (%\)** | **Ni (%)** | **Ni Contained** | **Nickel Distribution (%)** |
| +20 µm | 42.52 | 0.60 | 0.24 | 26.83 |
| -20 µm | 57.48 | 2.20 | 0.66 | 73.17 |

| **Scrubber Nickel Zone 2: 20 minutes** | | | | |
|---|---|---|---|---|
| **Fraction** | **Weight (%)** | **Ni (%)** | **Ni Contained** | **Nickel Distribution (%)** |
| +20 µm | 28.53 | 0.53 | 0.15 | 16.78 |
| -20 µm | 71.47 | 1.05 | 0.75 | 83.22 |

| **Table 3** - **Scrubber Nickel Zone 3: 5 minutes** | | | | |
|---|---|---|---|---|
| **Fraction** | **Weight (%)** | **Ni (%)** | **Ni Contained** | **Nickel Distribution (%)** |
| +20 µm | 42.52 | 0.84 | 0.36 | 28.77 |
| -20 µm | 57.48 | 1.53 | 0.88 | 71.23 |

| **Scrubber Nickel Zone 3: 20 minutes** | | | | |
|---|---|---|---|---|
| **Fraction** | **Weight (%**) | **Ni (%)** | **Ni Contained** | **Nickel Distribution (%)** |
| +20 µm | 37.85 | 0.78 | 0.29 | 23.62 |
| -20 µm | 62.15 | 1.53 | 0.95 | 76.38 |

**Tables 1 to 4 - comparisons between the increase in scrubbing time (5 min., 20 min.) and the nickel content of the fine fraction obtained.**

| **Table 4- Nickel Zone 4: 5 minutes** | | | | |
|---|---|---|---|---|
| **Fraction** | **Weight (%)** | **Ni (%)** | **Ni Contained** | **Nickel Distribution (%)** |
| +20 µm | 37.10 | 1.03 | 0.38 | 24.63 |
| -20 µm | 62.90 | 1.86 | 1.17 | 75.37 |

| **Scrubber Nickel Zone 4: 20 minutes** | | | | |
|---|---|---|---|---|
| **Fraction** | **Weight (%)** | **Ni (%)** | **Ni Contained** | **Nickel Distribution (%)** |
| +20 µm | 31.52 | 1.01 | 0.32 | 19.49 |
| -20 µm | 68.48 | 1.92 | 1.31 | 80.51 |

In the tables above, from the samples which underwent scrubbing 100, all the oxidized profile sorted by zones, named respectively in Table 5 as zone 1, zone 2, zone 3 and zone 4, increased in content with the increase in exposure time to scrubbing.

In this sense, scrubbing 100 causes the chemically-deposited ferruginous material coating the particles, as well as the nickel-containing mineral particles coating other particles, to be released and concentrated into a fine fraction FF. Moreover, it is important to note that the concentration of the nickel in the fine fraction FF by virtue of the withdrawal of the fine particles rich in goethite and nickel is also caused by the crystallinity stage of the goethite. The lower this crystallinity (immature crystal structure and more open), the greater the tendency to absorb the Ni in the structure, so the scrubbing will tend to break down these goethites which are younger and brittle, being concentrated in the fines and carrying a greater quantity of nickel in their structure. In contrast to this, in the upper, more mature levels where the goethite underwent various phases of dissolution and recrystallization ("*aging*") tends to expel the nickel from the structure forming goethites that are crystalline and poorer in nickel.

Observing the distribution of nickel in all the fractions tested, an increase was obtained in the fine fraction FF with the increase in exposure time to the scrubbing equipment. The table below shows the mineral composition of the nickel ore after scrubbing for 20 minutes in the fine fraction, where considerable concentration of the goethite containing iron and nickel can be observed:

**Table 5 - mineral composition of the nickel ore after scrubbing for 20 minutes**

| **Fraction** | **Olivine (%)** | **Goethite (%)** | **Cochromite (%)** | **Lizardite (%)** | **Magnetite (%)** | **Pyroxene (%)** |
|---|---|---|---|---|---|---|
| 0.5% Ni R.O.M. | 21.96 | 40.92 | 1.17 | 14.77 | 4.64 | 16.54 |
| 0.5% Ni Scrubber Fines | 12.44 | 68.39 | 0.76 | 15.60 | 1.61 | 1.20 |
| 0.9% Ni R.O.M. | 9.83 | 63.55 | 0.67 | 12.36 | 2.87 | 10.72 |
| 0.9% Ni Scrubber Fines | 5.08 | 80.28 | 0.94 | 10.36 | 2.51 | 0.80 |
| 1.2% Ni R.O.M. | 10.99 | 56.67 | 0.96 | 20.84 | 3.55 | 6.99 |
| 1.2% Ni Scrubber Fines | 5.43 | 74.06 | 1.04 | 17.89 | 0.99 | 0.58 |
| 1.4% Ni R.O.M. | 10.19 | 55.81 | 1.43 | 19.78 | 6.54 | 5.99 |
| 1.4% Ni Scrubber Fines | 5.59 | 71.16 | 1.01 | 19.93 | 1.31 | 1.00 |

Preferably, scrubbing 100 with shear force should occur for between 2 and 50 minutes, more preferably between 10 and 25 minutes. Said scrubbing 100 may occur in equipment such as a twin rotor mill, rod mill or scrubber.

After scrubbing 100, the method follows on to a step of sorting by size 110, as ahead.

### Step of sorting by size:

The objective of the step of sorting by size 110 is to make a particle size cutting in the material which underwent scrubbing 100, so that the material can be sorted into fine FF and coarse CF fractions, and thereafter sort the magnetic fraction MF from the coarse fraction CF of the material, the aim being to obtain magnetic fractions for subsequent chemical treatment and non-magnetic fractions rich in PGM and rare earths.

More specifically, the step of sorting by size 110 is carried out, preferably, by way of aero-cyclone or hydrocyclone equipment depending on the dry or wet processing situation. Said sorting by size equipment is configured to sort the fine fraction FF from the coarse fraction CF of the material fed. Preferably, the sorting occurring in the cyclone equipment sorts the material into fine fraction FF with size smaller than 75µm, preferably smaller than 30 µm, and more preferably smaller than 20 µm, and into coarse fraction CF with size greater than 75µm, preferably greater than 30 µm, and more preferably greater than 20 µm.

Having sorted the fine FF and coarse CF fractions from the material, the fine fraction FF is sorted for subsequent chemical processing, and the coarse fraction CF follows on to the magnetic sorting step, as ahead.

### Magnetic sorting step:

The purpose of the magnetic sorting step 120 is to sort a magnetic fraction MF from the coarse fraction CF obtained in the sorting by size step 110, to enable subsequent chemical processing of said magnetic fraction MF extracted from the coarse fraction CF jointly with the fine fraction FF extracted in the step of sorting by size 110.

Said magnetic sorting is carried out, preferably, by a magnetic sorter, metso or outotec, for example.

The non-magnetic fraction NMF extracted by the magnetic sorter is withdrawn from the present method. Nevertheless, it is important to note that said non-magnetic fraction NMF is mostly represented by silicates, and may also comprise PGM (gold, silver and platinum group metals) and rare earths, which advantageously show potential for processing through parallel methods.

The magnetic fraction MF extracted from the coarse fraction CF by the magnetic sorter, in turn, follows on to the scrubbing step 130, as ahead.

### Grinding step of the magnetic fraction:

The magnetic fraction MF extracted in the magnetic sorting step 120 is directed to a comminution equipment, such as a ball mill, to undergo a step of grinding 130 to under 150 µm, more preferably 75 µm, and may be, even more preferably, under 20 µm.

The objective of said step is to decrease the particle size of the magnetic fraction MF, preferably to a size smaller than 20µm, in line with the FF fraction obtained in the scrubbing step 100, whereby obtaining a fine magnetic fraction FMF for subsequent combination with the fine fraction FF obtained in the sorting by size step 110.

Having obtained the fine magnetic fraction FMF, the next step is to combine it with the fine fraction FF, as ahead.

The magnetic fraction, if rich in Cr2O3 originating from chromite or hercynite, may also be processed using the microwave irradiation. In this case, the coarse magnetic fraction rich in chrome is mixed with between 100 and 200 % m/m at a stoichiometric ratio of NaOH, preferably between 110 and 150% m/m, even more preferably between 125 and 135% m/m jointly with quantities of 100 to 200% m/m of the stoichiometry relative to the H2O2 chrome, more preferably between 150 and 180% m/m being microwaved for the time needed for converting over 90% of the chrome phases into sodium chromate, preferably for a time between 2 and 15 minutes, and more preferably for a time between 3 and 5 minutes, following the equations below:

*Cr₂O₃* + 4*NaOH* + 3*H₂O₂* + *Microwaves* ↔ 2*Na₂CrO₄* + *H₂O*

The sodium chromate in solution may then be filtered and sorted from the remainder of the coarse magnetic fraction.

### Step of combining the fine magnetic fraction with the fine fraction:

In this combining step 140, the fine magnetic fraction FMF is added to the fine fraction FF to form a final mass, hereinafter referred to as "nickel ore concentrate" NOC, which may be chemically processed, as seen ahead.

The two fine FF and magnetic fine FMF fractions can be combined by any suitable means, including simple mechanical mixing of both.

Moreover, said nickel ore concentrate comprises approximately 60% of the initial nickel ore volume, which in itself already implies a high sorting efficiency of the material that is effectively of interest for the subsequent processing, albeit disregarding the non-magnetic fraction withdrawn from the method, which moreover may be tapped subsequently by other methods for possibly containing other materials of parallel interest.

In light of the foregoing, the method of obtaining a nickel ore concentrate proposed herein advantageously results in a nickel ore concentrate wherein the ore particle enriched in nickel has greater surface area, since the goethite (FeO(OH)) and hematite (Fe2O3) and other nickel-bearing minerals were broken down mostly from the ore particles, which guarantees a nickel ore concentrate particularly desirable for subsequent chemical processing of high efficiency.

Having presented one possible embodiment of the method of obtaining of the nickel ore concentrate NOC, the present invention also refers to a processing method of nickel ore concentrate for obtaining derivatives of interesse, which will be explained in further detail ahead.

### METHOD OF PROCESSING THE NICKEL ORE CONCENTRATE

With regards processing a nickel ore concentrate for obtaining a laden LI liquor, the method in question comprises, in a general manner, in one possible embodiment, but not imperatively, the steps of:
- mixing 200 a nickel ore concentrate NOC with hydrochloric acid;
- heating or irradiating 210 the nickel ore concentrate NOC until achieving a desired conversion of the nickel and cobalt contained in the nickel ore concentrate into its soluble chloride form, and until achieving a desired conversion of iron, chrome and titanium contained in the nickel ore concentrate into its insoluble oxide form;
- optionally, regenerating 210A the hydrochloric acid used in the preceding leaching step 200 by evaporation thereof in the heating or irradiation step 210 and subsequent condensation, and returning the hydrochloric acid to the leaching step 200; and
- leaching 220 with water the nickel ore concentrate NOC for solubilizing the nickel and the cobalt contained in the nickel ore concentrate NOC, the leaching being optionally assisted by microwave irradiation; and
- obtaining 230 a LI liquor laden, chiefly with nickel, cobalt, iron, manganese and magnesium.

The steps mentioned above will be described in detail ahead.

### Step of mixing a nickel ore concentrate with hydrochloric acid

The mixing step 200 involves mixing a nickel ore concentrate with hydrochloric acid, for example, in equipment of the ribbon-blender or pug-mill type, or any equipment that equally mixes liquid with solid.

It is highly important to underline that the use of hydrochloric acid applied for mixing a nickel ore concentrate proves more efficient and more advantageous than the use of sulfuric acid commonly used in the state of the art, at least for the following reasons:
(i) The mixing method proposed herein requires a lesser quantity of hydrochloric acid for preparing the concentrate of hydrochloric acid compared to other methods; and
(ii) The hydrochloric acid has a vapor pressure relatively greater than the vapor pressure of sulfuric acid, which, for the method proposed herein, is beneficial as it enables the facilitated regeneration of hydrochloric acid and its use in a cyclical manner, as will be seen below.

Preferably, the quantity of 0.1 ml/g to 5 ml/g of hydrochloric acid per gram of material worked, more preferably 0.8 to 2.0 ml/g, is added to the nickel ore concentrate.

After mixing 200 comes the heating or irradiation step 210 of the concentrate, as ahead.

### Heating step

Once the mixture 200 is done, a mass of nickel ore concentrate is obtained therefrom, specifically in this case, which is sent to a device for heating or irradiating 210 the material. The heating can be by irradiation, convection, induction, heat conduction or any other forms of heating suitable for this purpose. Preferably, microwave irradiation is utilized. However, other devices may be used, such as, for example, infrared or radio-induction devices.

The purpose of said heating is to convert the nickel and cobalt of the nickel ore concentrate into its soluble chloride form, and convert the iron, chrome and titanium of the nickel ore concentrate in the insoluble oxide form. The conversion occurs in line with the following equation:

*NiO*_{(*solid*)} + *2HCl*_{(*aqueous*)} + *Energy -+ NiCl*_{2(*aqueous*)} + *H₂O*

*FeOOH*_{(*solid*)} + *3HCl*_{(*aqueous*)} + *Energy* → *FeCl*_{*3*(*aqueous*)} + 2*H₂O*

2*FeCl*₃ + 3*H₂O* + *Energy* → *Fe₂O*_{*3*(*solid*)} + *6HCl*

Or by the mechanisms,

4*FeCl*₃ + 3*O*₂ + *Energy* → 2*Fe*₂*O*_{3(*solid*)} + 6*Cl*₂

*FeOOH*_{(*solid*)} + *O*₂ + *Energy* → 2*Fe*₂*O*_{3(*solid*)} + 2*H*₂*O*

Therefore, said heating or irradiation 210 should be carried out until achieving the desired conversion levels of the nickel and cobalt contained in the nickel ore concentrate into its soluble chloride form (for example over 90%), and until achieving desired conversion levels of the iron, chrome and titanium contained in the nickel ore concentrate to its insoluble oxide form. By way of illustration, in an arrangement that uses microwave irradiation, said heating or irradiation 210 may occur, for example, for 5 to 50 minutes, more preferably for 10 to 30 minutes, or until the combination attains 150 to 200 degrees Celsius and maintained for about 5 to 40 minutes, preferably 15 to 30 minutes, preferably for 20 minutes.

It is highlighted that the heating or irradiation 210 is carried out, preferably, in a way that transfers energy, and not heat, to the material, such that said heating vibrates each one of the minerals contained in the material with a certain frequency, which depend on the constant dielectrics of each mineral. This transfer of energy in the form of vibration causes a change of phase in the ore.

Likewise, the goethite when subjected to action of, for example, irradiation, in the presence of oxygen transforms into hematite, such that this structural transformation leads the nickel to the surface of the mineral rendering the nickel, advantageously, more susceptible to subsequent to leaching.

It is also important to note that, notwithstanding the preferred times described above for the heating or irradiation step 210 described herein, the heating time used for transferring energy to the nickel ore substantially impacts the subsequent processing steps of the nickel ore concentrate, in particular for recovering iron and nickel. The crystal structures of the nickel and cobalt-carrying minerals, such as goethite and olivine, which will be crushed so that the nickel is exposed, have an open atomic structure, enabling the hydrochloric acid to penetrate. The penetrability can be amplified by electromagnetic waves irradiated via microwaves, for example, leaching the nickel and cobalt from these structures forming a stable chloride, since the portion of the leached iron forms an unstable chloride which will quickly convert into the form of insoluble hematite and the portion of the iron not leached by the hydrochloric acid reacts with oxygen from the air, also forming insoluble hematite.

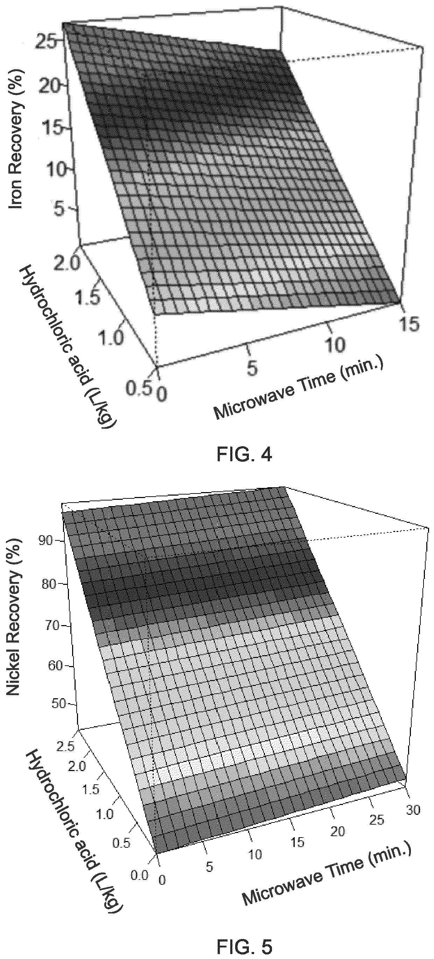

To illustrate this point, figures 4 and 5 disclose graphs that correlate the microwave irradiation time (Microwave Time (min.)), the quantity of acid (Hydrochloric Acid (L/kg)) used in the leaching step 200 and the percentage of material recovered from the nickel ore concentrate in the subsequent processing steps, of iron (iron Recovery (%)) and (Nickel Recovery (%)), respectively.

It is noted by way of figure 4 that the longer the nickel ore remains under irradiation, the less iron is recovered in the subsequent processing method. In contrast, figure 5 indicates that the longer the nickel ore is irradiated by microwaves, the more nickel is recovered.

This being the case, it is clear that the heating time or irradiation 210 should take into account the element of interest to be withdrawn, or even find a balance between both, based on the desired application.

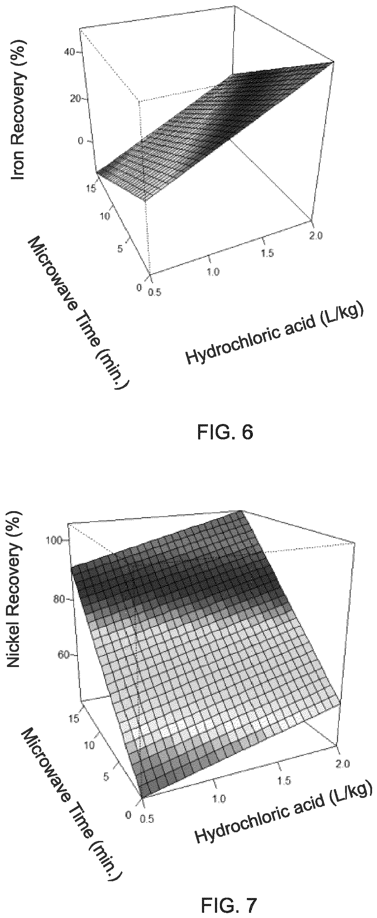

To illustrate this possibility even further, also in figures 6 and 7, it is also possible to note the selectivity of the nickel recovery method for the main liquor contaminant, iron. Besides the selectivity, it is possible to control the quantity of iron solubilized over time irradiated by microwaves and acid concentration utilized, bring unique versatility to the method. For example, in the time equal to 20 minutes and concentration of 2 liters of acid per kilogram of sample, recoveries are near to 100% of nickel and almost negligible recoveries of iron. Additionally, the iron present in the liquor will be precipitated in the form of phosphate and, will therefore be a coproduct of the nickel and cobalt production.

This said, the preferred (but not compulsory) use of microwaves for irradiating the nickel ore in this step brings a series of advantages to the method of obtaining nickel ore concentrate, and to the processing method of the nickel ore as a whole. Some advantages are described below, non-exhaustively:
(i) By irradiation of the microwaves, it is possible to suitably control the solubilization of iron and, accordingly, enable the control of the elements to be extracted of the nickel ore, as already explained above.
(ii) The use of microwave irradiation enables a high conversion of nickel and cobalt (over 85%) to be obtained, and this level of conversion is not achievable by conventional ovens.
(iii) The microwaves enable the conversion of the elements contained in the nickel ore at ambient pressure, whereas the methods of the state of the art (for example, the HPAL method) work at high pressures to achieve lower efficiencies and selectivity.
(iv) The use of microwaves enables the regeneration of the hydrochloric acid used in the processing of nickel ore concentrate, as seen ahead, because this acid is highly susceptible to microwaves and has a very high vapor pressure.

In any case, it is emphasized that the use of irradiation, and also by way of microwaves, is not imperative to carry out the present method, such that, as already exemplified previously, other forms of heating may be utilized.

Following this first heating or irradiation 210, the next optional step is regenerating the hydrochloric acid used in the immediately prior mixing step 200.

### Step of regenerating the hydrochloric acid

After the heating or irradiation 210 referred to above, about 20% to 90% of the hydrochloric acid originating from the mixture 200 remains in the material, while the other 80% to 10% is evaporated, depending on the residence time, to the high value of the vapor pressure of the hydrochloric acid.

Considering that the present method proposed herein works at ambient pressure, this enables the hydrochloric acid to evaporate and be easily captured and condensed for regeneration.

Accordingly, in a possible and optional embodiment of the present method, it is advantageously possible to carry out a step of regenerating 210A the hydrochloric acid, involving the capture of the acid vapor generated in heating 210 and its subsequent condensation, and subsequently directing or returning this acid to the mixing step 200.

Put otherwise, by way of this possible embodiment of the present invention, a large part of the hydrochloric acid used is regenerated and recirculated, thus obtaining an efficient method with low consumption of hydrochloric acid for the mixture 200.

Whether or not this step of regenerating the hydrochloric acid has been carried out, the next stage is a leaching step 220, as ahead.

### Leaching step assisted by microwaves

After the heating or irradiation step 210, followed or not by regenerating the hydrochloric acid, the nickel ore concentrate undergoes leaching 220, which may be assisted or complemented by a simultaneous microwave irradiation.

Said leaching step 220 consists of mixing the nickel ore concentrate irradiated from the prior heating or irradiation step 210 with water for solubilizing the nickel and the cobalt inside the concentrate. Additionally, in this leaching step 220, microwaves may be irradiated in order to accelerate the leaching method in some specific applications. In this case, the irradiation performed in this step is carried out preferably at low temperatures, more preferably between 20 and 100°C, more preferably between 30 and 50°C.

It is emphasized that the microwave irradiation assisting this leaching 220 is optional and not compulsory, it being desirable depending on the type of application. Moreover, this step of irradiation simultaneously to leaching 220 is not to be mistaken for the immediately prior heating or irradiation step 210.

By way of this leaching step 220, whether or not assisted by microwave irradiation, there is obtained a nickel ore concentrate for obtaining a LI liquor laden with nickel, cobalt, iron, manganese and magnesium, bearing materials of interest for subsequent processing and extraction of these materials from the LI liquor.

Advantageously, the present invention solves the problem of using heat originating from polluting sources such as coal, which produces CO2 when burned, knowingly harmful to the environment, at the same time using hydrochloric and not sulfuric acid, the hydrochloric acid providing greater recovery of nickel from a lesser quantity of acid used, attaining recoveries of over 90% in the ratio of 1,125:1 ml/g.

Additionally, in the preferred embodiment, the present method of processing nickel ore concentrate enables the execution of the leaching at ambient pressure thanks to the irradiation by microwaves, differently, for example, to the HPAL method in the state of the art.

By way of clarification, the HPAL method, as already stated previously, demands high temperatures for converting the nickel ore, which requires heating at high pressures, not just to achieve the high temperatures needed, but also to maintain the iron in the HPAL method insoluble. In its preferred embodiment, using microwave irradiation, the method of the present invention does not need high temperatures or high pressures, and can be carried out at ambient pressure.

As an example, the tables below present liquor recovery tests in different conditions. The first table (table 6) indicates the compositions tested, and the second table (table 7) indicates the recovery results obtained in the tests.

**Table 6 - compositions of the liquors tested.**

| **Test Parameters** | | | **Composition of the Liquor** | | | | | | | |
|---|---|---|---|---|---|---|---|---|---|---|
| **Test** | **Consumption HCl (L/kg)** | **Microwave Time (min.)** | **Nickel (kg/m³)** | **Iron (kg/m³)** | **Cobalt (kg/m³)** | **Silicon (kg/m³)** | **Calcium (kg/m³)** | **Titanium (kg/m³)** | **Chrome (kg/m³)** | **Manganese (kg/m³)** |
| **Theoretical Liquor** | - | - | **15.579** | **540.016** | **1.422** | **54.377** | **7.22** | **1.07** | **7.188** | **6.537** |
| 001 | 1 | 15 | 14.375 | 18.250 | 1.125 | 8.000 | 0.500 | 0.375 | 0.625 | 5.875 |
| 002 | 1.25 | 15 | 14.375 | 14.625 | 1.125 | 1.250 | 0.250 | 0.000 | 0.125 | 6.000 |
| 003 | 1 | 10 | 14.250 | 17.750 | 1.250 | 4.500 | 0.250 | 0.000 | 0.125 | 6.125 |
| 004 | 2 | 5 | 13.125 | 344.000 | 1.184 | 7.000 | 5.000 | 0.000 | 3.375 | 5.625 |
| 005 | 1 | 10 | 14.375 | 12.000 | 1.250 | 2.000 | 0.250 | 0.000 | 0.125 | 6.000 |
| 006 | 1.5 | 16 | 14.000 | 27.125 | 1.200 | 3.375 | 0.375 | 0.000 | 0.250 | 5.750 |
| 007 | 0.75 | 8 | 12.375 | 20.875 | 1.125 | 3.500 | 0.250 | 0.000 | 0.250 | 5.750 |
| 008 | 0.75 | 16 | 13.000 | 3.625 | 1.125 | 3.375 | 0.250 | 0.000 | 0.125 | 5.750 |
| 009 | 1.125 | 12 | 15.000 | 21.375 | 1.250 | 23.125 | 0.250 | 0.625 | 0.375 | 6.125 |
| 010 | 1.125 | 12 | 14.750 | 16.875 | 1.250 | 18.875 | 0.375 | 0.500 | 0.375 | 6.000 |
| 011 | 1 | 13 | 14.625 | 14.375 | 1.250 | 13.250 | 1.125 | 0.250 | 0.250 | 6.000 |

**Table 7 - recoveries obtained from the tests.**

| **Test Parameters** | | | **Recovery** | | |
|---|---|---|---|---|---|
| **Test** | **Consumption HCl (Ukg)** | **Microwave Time (min.)** | **Ni (%)** | **Fe (%)** | **Co (%)** |
| **Theoretical Liquor** | - | - | - | - | - |
| 001 | 1 | 15 | 92.325 | 3.379 | 79.114 |
| 002 | 1.25 | 15 | 92.325 | 2.708 | 79.114 |
| 003 | 1 | 10 | 91.522 | 3.286 | 87.904 |
| 004 | 2 | 5 | 84.297 | 63.685 | 83.263 |
| 005 | 1 | 10 | 92.325 | 2.222 | 87.904 |
| 006 | 1.5 | 16 | 89.917 | 5.022 | 84.388 |
| 007 | 0.75 | 8 | 79.480 | 3.865 | 79.114 |
| 008 | 0.75 | 16 | 83.494 | 0.671 | 79.114 |
| 009 | 1.125 | 12 | 96.339 | 3.957 | 87.904 |
| 010 | 1.125 | 12 | 94.733 | 3.124 | 87.904 |
| 011 | 1 | 13 | 93.931 | 2.661 | 87.904 |

The "Test" column of the tables above indicates the tests performed with the different compositions of liquors. The line referring to the "theoretical liquor" is hypothetical, considering that the entire content of the nickel ore has been solubilized. The lines indicating numbers 001 to 011 refer to the contents of liquors tested after the step of conversion, in this case with microwaves, and with microwave time in minutes, content of hydrochloric acid in liters per kilogram, and leaching with water.

Comparing the liquor of method 004 with the liquor of method 006, for example, it can be seen that the microwaving time alters the solubilization of the iron drastically, the recovery of iron drops from 63.685% of the liquor of method 004 to 5.022% for the liquor of method 006, maintaining the recovery of nickel and cobalt high.

In another example, the liquor of method 009 has high recoveries of nickel and cobalt and low recovery of iron, also having a liquor free of contaminants. The largest contents such as that of silica can be withdrawn, for example, through filtering with diatomaceous earth, and the other contaminant, manganese, can be sorted by precipitation and filtering in pH 7, generating a liquor rich solely in nickel and cobalt.

Having obtained the LI liquor laden with materials of interest, these materials of interest can be extracted from said liquor by a series of additional steps, which will be clarified ahead.

### Step of filtering the coproduct (oxide containing iron, chrome and titanium)

Once the LI liquor is obtained, it is possible, in one embodiment, to carry out filtering 230 in which the insoluble oxide form containing iron, chrome and titanium is thickened, filtered and separated from the laden liquor. Said filtering can be carried out by a filter-press, for example, and generates a first coproduct CO chiefly containing iron oxide (Fe2O3), silica dioxide (SiO2) and chrome oxide (Cr2O3), being eligible for additional subsequent separation and processing, should there be interest in obtaining these materials. It is important to note, naturally, that the insoluble form extracted may contain other materials in a lower content, but chiefly contains oxide containing iron, chrome and titanium.

### Iron phosphate precipitation and filtering steps

Following the filtering step 230, the precipitation step 240 for extracting the iron contained in the LI liquor can be carried out. As such, a precipitation tank is used, for example, and the LI liquor from phosphate sources (for example, phosphoric acid, sodium phosphate, ammonium phosphate, among others) is added to it in stoichiometric proportion, to force the selective precipitation of the iron contained in the LI liquor in the form of iron phosphate, the use of iron phosphate as seed to facilitate the precipitation thereof being optional.

In regards to the steps related to obtaining iron phosphate, it is emphasized that iron is one of the most significant interferents and which may be a coproduct depending on the way it is precipitated. For example, the iron phosphate (FePO₄) is insoluble in a hydrochloric medium in a low pH.

It is noteworthy that the nickel remains solubilized for a broad range of pH, 0 to 7, and above this it precipitates in the form of nickel hydroxide, chiefly at pH 9. The iron, however, precipitates in the form of phosphate from pH 1.8 and remains in solid phase at a high pH. Due to this difference in precipitation condition noted between nickel and iron, it is possible to selectively precipitate iron in the form of phosphate, which is a product with added value.

In this sense, precipitation occurs preferably with 200% of the stoichiometric ratio of hydrogen peroxide and 150% of the stoichiometric ratio of phosphoric acid relative to Fe ions that are in solution.

The excess is used in increase the pH of the solution to maintain the iron phosphate in solid phase. In this context, as an illustration, after 2 hours of precipitation at 80°C, advantageously over 97% of precipitation is obtained, with a content of over 95% of iron phosphate without coprecipitation of nickel and cobalt.

Moreover, after precipitation with phosphoric acid (H₃PO₄), it was noted that the LI liquor turns a greenish-blue color, as a result of the nickel and cobalt ions in solution. In contrast, the iron phosphate (FePO₄) forms a high-purity, white precipitate.

That said, the iron phosphate having been precipitated, the LI liquor or part thereof containing the precipitated iron phosphate is passed through a press-filter for filtering 241 the iron phosphate, thereby obtaining said iron phosphate as a product of interest.

### Step of purifying by extraction by precipitation.

After the step of removing the iron in the precipitation as phosphate, the main contaminants of the solution are manganese and magnesium. The manganese can precipitate together with the nickel and cobalt of it is in solution, requiring the step of purifying the liquor as the extraction by solvent or selective precipitation of the manganese. The magnesium does not precipitate together with the MHP and, therefore, there is no need for the liquor to have a low concentration of magnesium.

The manganese can be precipitated subsequently to the iron, using MnO2 as precipitating agent, KMnO4 in the concentration between 0.2mol/L and 2 mol/L, preferably between 0.4 and 0.6 mol/L at a temperature between 10 and 40°C, more preferably between 20 and 35°C for 30 minutes to 120 minutes, more preferably between 60 and 90 minutes while stirring. After removing and filtering the solid products from these two main coproducts, iron in the form of phosphate and manganese in the form of oxide, the MHP can be precipitated adding magnesium oxide up to pH between 5 and 10, preferably between 6 and 8. The precipitated MHP should be filtered and the solution rich in magnesium sent to a "spray roaster" for regenerating the hydrochloric acid and precipitating the magnesium oxide, which was in solution in the form of chloride.

### Steps of extraction by solvent and stripping the solvent

After the steps of precipitation 240 and filtration 241 of the iron phosphate from the LI liquor, it is possible to carry out the step of purifying the LI liquor by way of extracting 250 certain materials therefrom by solvent (for example, magnesium and traces of iron from the prior steps), with a view to maintaining in the LI liquor only quantities of nickel and cobalt. As such, a solvent (for example, Cyanex 301) is added to the LI liquor, preferably in the proportion of two parts of organic phase to one part liquid, with contact time from 5 to 50 minutes, preferably from 20 to 40 minutes, preferably 30 minutes, at a temperature of 10 to 80 degrees, more preferably from 20 to 40 degrees, more preferably at 30 degrees. The extraction steps occur in countercurrent, preferably in 1 to 6 steps, more preferably from 2 to 4 steps, more preferably in 3 steps, and may occur both in mixing tanks as in pulse columns.

Subsequently, the solvent is stripped 251 by adding hydrochloric acid to the LI liquor, preferably 0.5 parts of hydrochloric acid in the concentration of 10 mol/L for each organic part. The solvent SO is returned to the extraction step 250 and the LI liquor purified, mostly containing nickel and cobalt.

Regarding the steps listed above, the extraction with solvent is a liquid-liquid extraction technique that uses the immiscibility of the phases to transfer the mass of the aqueous phase, the LI liquor, to the organic phase.

Preferably, the solvent used is Cyanex 301, an extractant with the organic function of thiophosphate and has high selectivity for extracting nickel and cobalt.

It is noted, for example, that for the condition of 2 mol/L of Cyanex 301 in isoparaffin with temperature of 50°C and natural pH of 1.8, after three extraction stages in these conditions, 97% extraction of the nickel ions was obtained. After two extraction stages in these conditions, 99% extraction of the cobalt ions was obtained.

As a further example, the above conditions were observed for stripping in the organic phase laden with nickel and cobalt with residence time from 10 to 50 minutes, preferably from 20 to 40 minutes, more preferably 30 minutes of extraction for desorption with hydrochloric acid in the concentration preferably from 1 to 10 mol/L, preferably from 2 to 6 mol/L, more preferably 3 mol qL at a temperature preferably from 20 to 60°C, more preferably from 30 to 40°C with aqueous organic ratio of preferably (A:O) 1:0.5 to 1:5, more preferably (A:O) from 1:1 to 1:3, more preferably the ratio (A:O) of 1:2. It was noted that extraction by solvent generates an acid phase rich in nickel and cobalt.

### Precipitation steps of nickel and cobalt

Once the nickel and cobalt rich LI liquor is obtained, to extract these materials of interest from the liquor, magnesium oxide (calcined magnesia) is added to the LI liquor in a precipitation tank.

Preferably, magnesium oxide is added until the pH of the solution is nine, and then precipitation is carried out. The product of the precipitation 260 occurring in these conditions is nickel hydroxide and cobalt HNC, which can be extracted from the LI liquor, for example, through filtering 261 by filter-press. By way of illustration, precipitation can be performed with magnesium oxide (MgO) by adding from 0.1 to 1 kilogram of magnesium oxide per kilogram of the mixture of nickel plus cobalt in solution, for 1 to 5 hours, more preferably from 2 to 4 hours, more preferably for 3 hours at a temperature of 20 to 80°C, more preferably from 30 to 60°C, more preferably 40°C. Advantageously, it was found that both nickel and cobalt precipitated over 99%. After this precipitation step with magnesium oxide, a decanting and filtering step can be performed on this precipitate of nickel hydroxide and cobalt to obtain it.

It is emphasized that the nickel hydroxide and cobalt is a product that is widely used in the batteries industry, but, if desirable, new sorting steps can be used to obtain nickel and cobalt in their individual forms and subsequent reduction to electrolytic metal form.

Said steps may involve, for example, the sorting of the nickel and cobalt through separation by solvent, followed by extraction of nickel and cobalt through electrolysis. It is further emphasized that the nickel obtained by way of the method described herein refers to high-purity nickel, that is, class I nickel.

### Steps of pyrohydrolysis for extracting or regenerating

After the extraction of the nickel hydroxide and cobalt from the LI liquor, said liquor residually contains magnesium chloride and hydrochloric acid. Should you wish to extract or regenerate these elements, it is possible to adopt the step of pyrohydrolysis 270 of said LI liquor, preferably by way of "Spray Roaster" equipment or similar.

The magnesium oxide inserted into the liquor in prior steps is precipitated and the hydrochloric acid is also extracted, enabling regeneration and reutilization of both, including in the steps mentioned above of the method described herein.

Therefore, advantageously, this embodiment of the method of the present invention further differs from the state of the art by providing the regeneration of both the magnesium oxide and the hydrochloric acid, thus obtaining a circulating load.

Having set out the methods of obtaining a nickel ore concentrate and processing a nickel ore concentrate, it is clear that a method of recovering materials of interest from nickel ore may be obtained by combining both methods into one continuous method, if so desired.

Moreover, it also clarifies that the methods proposed herein are capable of bringing countless benefits of an economic and ecological nature for the ambit of recovering materials of interest from nickel ore. The following advantages, non-exhaustively, can be cited:
(A) Enable the recovery of residues and materials currently untapped from this nickel ore, thus enabling the removal of these residues from nature;
(B) Elimination of the use of fossil-source heating, decreasing the emission of CO2, typical of this type of process; and
(C) Recovery of economically relevant materials.

More particularly, the advantages noted by using the present invention, still in a non-exhaustive manner, are:
(I) Processing the nickel ore with high efficiency, given that this type of deposit was mostly overlooked by the industry by the then lack of efficiency of the existing recovery methods;
(II) Recovery of multiple subproducts from nickel ore;
(III) Control of the solubility of iron from nickel ore and, consequently, control of the subproducts to be extracted;
(IV) Elimination of the need to convert elements from the nickel ore through ovens, completely eliminating the emittance of polluting gases from the process;
(V) Use of hydrochloric acid, which has greater leaching efficiency and has greater vapor pressure than sulfuric acid, which enables enhanced efficiency of the method and possibility of regeneration; and
(VI) Possibility, in some embodiments, of economy in the quantity of material used through the possibility of regenerating hydrochloric acid and manganese oxide.

Having described one example of a preferred embodiment, it should be understood that the scope of the present invention covers other possible variations, being limited solely by the content of the accompanying claims, potential equivalents being included therein.

## Claims

1. A method of obtaining a nickel ore concentrate, **characterized in that** the method comprises the steps of:
- scrubbing (100) the nickel ore;
- sorting (110) the nickel ore by size into at least one fine fraction (FF) and one coarse fraction (CF);
- magnetically sorting (120) the coarse fraction (CF) for obtaining a magnetic fraction (MF);
- grinding (130) the magnetic fraction (MF) for obtaining a fine magnetic fraction (FMF); and
- combining (140) the fine fraction (FF) and the fine magnetic fraction (FMF) for obtaining a nickel ore concentrate (NOC).

2. The method of obtaining a nickel ore concentrate, according to claim 1, **characterized in that** the scrubbing step (100) is carried out by way of twin rotor mill, rod mill or "scrubber" type equipment.

3. The method of obtaining a nickel ore concentrate, according to claim 1, **characterized in that** the scrubbing step (100) occurs for between 2 and 50 minutes.

4. The method of obtaining a nickel ore concentrate, according to claim 1, **characterized in that** the step of sorting by size (110) obtains a fine fraction (FF) with a particle size smaller than 75µm and a coarse fraction (CF) with a particle size greater than 75µm.

5. The method of obtaining a nickel ore concentrate, according to claim 1, **characterized by** comprising a crushing step (100B) performed until the processed material is under 2' in size'.

6. A method of processing a nickel ore concentrate **characterized by** comprising the steps of:
- mixing (200) a nickel ore concentrate (NOC) with hydrochloric acid,
- irradiating (210), by microwaves, the nickel ore concentrate (NOC) until converting over 90% of the nickel and cobalt contained in the nickel ore concentrate into its soluble chloride form, and until achieving a desired conversion of the iron, chrome and titanium contained in the nickel ore concentrate into its insoluble oxide form;
- leaching (220) the nickel ore concentrate (NOC) with water for solubilizing the nickel and the cobalt contained in the nickel ore concentrate (NOC); and
- obtaining (230) a liquor (LI) laden with nickel, cobalt, iron and magnesium.

7. The method of processing a nickel ore concentrate according to claim 6, **characterized in that** the leaching step (220) is assisted by microwave irradiation.

8. The method of processing a nickel ore concentrate according to claim 6, **characterized by** comprising the step of regenerating (210A) the hydrochloric acid used in the first leaching step (200) by evaporation thereof in the heating step (210), condensing the hydrochloric acid vapor and returning the condensed hydrochloric acid to the leaching step (200).

9. The method of processing a nickel ore concentrate according to claim 6, **characterized in that** the first leaching step (200) comprises adding 0.1 to 5 ml/g of hydrochloric acid per gram of nickel ore concentrate.

10. The method of processing a nickel ore concentrate according to claim 6, **characterized in that** the heating step (210) comprises heating for a period of 5 to 50 minutes.

11. The method of processing a nickel ore concentrate according to claim 6, **characterized in that** the second leaching step (220) comprises microwave irradiation at a temperature between 20°C and 100°C.

12. The method of processing a nickel ore concentrate according to claim 6, **characterized by** comprising a filtering step (230) of the liquor (LI) for obtaining the insoluble oxide form containing iron, chrome and titanium.

13. The method of processing a nickel ore concentrate according to claim 6, **characterized by** comprising a precipitation step (240) for extracting the iron contained in the LI liquor by adding at least one source of phosphate in stoichiometric proportion to the liquor (LI).

14. The method of processing a nickel ore concentrate according to claim 13, **characterized by** comprising the steps of:
- using MnO2 and KMnO4 for precipitating the manganese subproduct of the precipitation step (240) for extracting the iron contained in the LI liquor,
- precipitating the MHP adding magnesium oxide.

15. The method of processing a nickel ore concentrate according to claim 6, **characterized by** comprising the steps of:
- adding (250) a solvent (SO) to the liquor (LI) for obtaining a liquor (LI) mostly comprising nickel and cobalt;
- stripping (251) the solvent (SO) by adding hydrochloric acid to the liquor (LI); and
- returning the solvent (SO) to the extraction step (250).

16. The method of processing a nickel ore concentrate according to claim 15, **characterized by** comprising the step of pyrohydrolysis (270) of the liquor (LI) for extracting magnesium oxide and hydrochloric acid.

17. The method of processing a nickel ore concentrate according to claim 6, **characterized by** comprising the step of adding (340) magnesium oxide to the liquor (LI) for obtaining nickel hydroxide and cobalt (HNC).

18. The method of processing a nickel ore concentrate according to claim 6, **characterized by** comprising the steps of:
- mixing a coarse magnetic fraction rich in chrome with H2O2; and
- irradiating the mixture by way of microwaves for the time needed to convert over 90% of the chrome phases into sodium chromate.

19. The method of recovering derivatives from nickel ore **characterized by** comprising the steps of a method of obtaining a nickel ore concentrate, as defined in any one of claims 1 to 5, and further comprises the steps of a method of processing a nickel ore concentrate as defined in any one of claims 6 to 18.
